(19) Europäisches Patentamt
European Patent Office
Office européen des brevets

(11) **EP 2 206 842 A1**

(12) **DEMANDE DE BREVET EUROPEEN**

(43) Date de publication:
**14.07.2010 Bulletin 2010/28**

(51) Int Cl.:
**E03F 5/10** *(2006.01)*     **F16K 31/30** *(2006.01)*
**G05D 7/01** *(2006.01)*

(21) Numéro de dépôt: **09180279.3**

(22) Date de dépôt: **22.12.2009**

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**
Etats d'extension désignés:
**AL BA RS**

(30) Priorité: **23.12.2008 FR 0859021**

(71) Demandeur: **ECOFAB**
**80130 Friville Escarbotin (FR)**

(72) Inventeur: **Barrier, Stéphane**
**76260 Eu (FR)**

(74) Mandataire: **Cochonneau, Olivier et al**
**Cabinet Beau de Loménie**
**Immeuble Eurocentre (Euralille)**
**179 Boulevard de Turin**
**59777 Lille (FR)**

(54) **Régulateur de débit de type guillotine notamment pour bassin et canalisation**

(57) L'invention concerne un régulateur de débit du type guillotine, notamment pour un ouvrage de stockage d'eau, comprenant une première plaque fixe (2) munie d'un orifice (16) pour l'écoulement de l'eau et une seconde plaque mobile (3) d'obturation de l'orifice. La seconde plaque est montée en translation verticale par rapport à la première plaque (2). Des moyens de commande sont agencés pour translater verticalement entre une position haute et une position basse, la seconde plaque (3) par rapport à la première plaque (2) et modifier l'obturation de l'orifice (16) en fonction de la hauteur h d'eau. L'orifice est constitué d'une partie supérieure (17) et d'une partie inférieure (18), la partie supérieure présentant une forme conique et évasée vers son extrémité supérieure (19), telle que la section longitudinale d'une trompette, et la partie inférieure présentant une forme primitive, telle qu'un carré, un rectangle, un cercle ou un demi-cercle.

FIG.7

## Description

La présente invention concerne un régulateur de débit du type guillotine pour la gestion des eaux pluviales, usées et/ou d'orages. Un tel régulateur sera en particulier agencé sur des bassins, des canalisations, des cuves et des déversoirs. D'autres applications liées à ce domaine restent toutefois envisageables.

La présente invention sera notamment mise en oeuvre par des fabricants de matériels hydromécaniques, voire par des métallurgistes où certains éléments essentiels du régulateur seront mis en oeuvre. Elle trouvera notamment son application chez les installateurs d'équipements de voirie, de bassins de rétention d'eaux pluviales et de bassins d'orages, voire autres.

Des régulateurs de débit d'eau ont pour fonction d'assurer un débit de fuites constant en sortie d'un ouvrage de stockage ou dans une canalisation de régulation hydrosanitaire, avant rejet au réseau d'assainissement. De tels régulateurs de débit sont dans certains cas imposés par la loi, voire par les collectivités. Ils ont notamment pour but d'éviter le rejet massif d'eaux chargées en hydrocarbures ou polluées dans les nappes phréatiques ou les cours d'eau avoisinants, le régulateur de débit permettant le traitement de la totalité de l'eau stockée provisoirement en bassin en évitant de dépasser le débit admissible par les appareils de traitement en aval. De tels régulateurs de débit sont mis en oeuvre sur diverses installations telles que les bassins d'orages, les bassins de rétention d'eaux pluviales, les déversoirs d'orages, les canalisations des réseaux d'eaux pluviales et/ou d'eaux usées, voire des appareils de traitement des eaux.

Parmi les régulateurs de débit existants, il est connu des régulateurs de débit de type guillotine. Un tel régulateur de débit du type guillotine comprend une première plaque qui est munie d'un orifice, cette plaque étant fixée de manière étanche sur un orifice ou conduit de sortie de l'ouvrage sur lequel il est installé. Une seconde plaque permet l'obturation de l'orifice de la première plaque sur laquelle elle est disposée en appui ; cette seconde plaque est montée coulissante notamment à la verticale par rapport à la première plaque en sorte de modifier l'obturation de l'orifice en fonction de la hauteur d'eau dans le bassin, le regard ou la canalisation constituant l'ouvrage et ainsi de permettre de réguler le débit de l'eau évacuée vers le réseau d'assainissement quelle que soit la hauteur d'eau stockée dans l'ouvrage. La translation verticale de la seconde plaque par rapport à la première plaque, en fonction du niveau de l'eau dans l'ouvrage, est assurée au moyen d'un flotteur mécanique. Selon les régulateurs de débit du type guillotine connus actuellement, l'orifice présente une forme circulaire ou oblongue, tel que décrit par exemple dans le document DE 38.22.555 A1. Selon une variante de conception illustrée dans le document DE 37.41.437 A1, l'orifice présente une forme conique évasée vers son extrémité inférieure. De tels régulateurs de débit présentent pour inconvénient de ne pas assurer un débit constant lors d'une variation d'obturation de l'orifice, dépendante de la variation du niveau d'eau dans l'ouvrage de stockage sur lequel le régulateur est agencé.

L'objet de la présente invention vise à mettre en oeuvre un régulateur de débit type guillotine dont la conception permet d'optimiser la constance du débit lors d'une variation du niveau de l'eau stockée dans l'ouvrage. A ce titre, le régulateur de débit de type guillotine, selon l'invention, comprend au moins une première plaque fixe munie d'un orifice pour l'écoulement de l'eau et une seconde plaque mobile pour l'obturation de l'orifice sur la première plaque. La seconde plaque est parallèle et montée en translation verticale par rapport à la première plaque. En outre, des moyens de commande sont agencés pour translater verticalement, entre une position haute et une position basse, la seconde plaque par rapport à la première plaque et modifier la position d'obturation de l'orifice en fonction de la hauteur d'eau. Ainsi, lorsque le niveau d'eau augmente, la seconde plaque translate vers le bas par rapport à l'orifice, visant à obturer cet orifice, et inversement, lorsque le niveau d'eau baisse, la seconde plaque translate vers le haut par rapport à l'orifice visant à le dégager complètement.

De manière remarquable, l'orifice est constitué d'une première partie supérieure et d'une seconde partie inférieure. La partie supérieure présente une forme sensiblement conique et évasée vers son extrémité supérieure, telle qu'une section longitudinale de trompette. Par ailleurs, la partie inférieure présente une forme primitive telle qu'un carré, un rectangle, un cercle ou un demi-cercle, voire autre.

Une telle forme d'orifice présente pour avantage d'assurer un débit constant de l'eau à partir d'un certain niveau dans le bassin, quelle que soit la variation de position d'obturation dudit orifice par la seconde plaque qui translate verticalement vers le haut ou vers le bas sous l'action des moyens de commande, respectivement lors d'une baisse de niveau de l'eau ou d'une augmentation du niveau de l'eau.

La partie inférieure et la partie supérieure de l'orifice peuvent être jointes l'une à l'autre, en sorte que l'extrémité inférieure de la partie supérieure et l'extrémité supérieure de la partie inférieure communiquent, l'orifice constituant un passage unique. Toutefois, de manière préférentielle, la partie supérieure et la partie inférieure de l'orifice sont distantes l'une de l'autre sur la première plaque, l'extrémité inférieure de la partie supérieure et l'extrémité supérieure de la partie inférieure étant séparées l'une de l'autre par une partie pleine de ladite première plaque. Dans ce cas, l'orifice est constitué de deux passages distincts. Cette conception présente pour avantage d'améliorer la rigidité aux angles sous l'action du flux de l'eau ou d'éventuels corps solides en présence dans l'ouvrage de stockage et pouvant passer au travers de l'orifice.

Selon l'invention, des moyens de dégagement sont agencés sur le régulateur de débit pour maintenir dégagée la partie inférieure de l'orifice lorsque la seconde plaque mobile est en position basse, correspondant à un certain niveau d'eau atteint dans l'ouvrage de stockage, en dessous duquel le débit ne dépasse pas la valeur demandée et définie par les besoins de l'installation.

Selon un mode de réalisation des moyens de dégagement, le coté inférieur de la seconde plaque comprend un décrochement dont les dimensions permettent de maintenir dégagée la partie inférieure de l'orifice lorsque ladite seconde plaque a atteint la position basse. Selon une variante de réalisation, on prévoit des moyens de butée agencés pour limiter la translation vers le bas de la seconde plaque dans une position selon laquelle le bord inférieur de ladite seconde plaque est arrêté entre la partie supérieure et la partie inférieure de l'orifice.

De manière préférentielle, les moyens de commande agencés pour translater verticalement la seconde plaque sont constitués par un flotteur mécanique. On pourrait toutefois envisager d'autres moyens de commande, par exemple un système d'actionnement en translation verticale de la plaque, tel qu'un vérin ou une crémaillère, asservi selon une position du niveau de l'eau détectée par un capteur de mesure.

De manière préférentielle, la première plaque comprend sur sa face interne deux glissières verticales disposées de chaque coté latéral de l'orifice, les extrémités latérales de la seconde plaque étant montées coulissantes dans lesdites glissières. On entend par face interne, la face orientée du coté de la zone de stockage de l'ouvrage qui contient l'eau et opposée à la face qui vient en appui sur un support, tel que la paroi de l'ouvrage, permettant la fixation du régulateur de débit. A ce titre, selon l'invention, des moyens de fixation sont agencés sur la première plaque pour permettre l'assemblage du régulateur de débit sur un support agencé sur l'ouvrage de stockage de l'eau.

Le régulateur de débit selon l'invention, présentant l'une et/ou l'autre des caractéristiques définies ci-dessus, équipera des ouvrages de stockage d'eau tels qu'un bassin d'orages, un bassin de rétention d'eaux pluviales, un déversoir d'orage, une canalisation d'eaux pluviales et/ou d'eaux usées, une cuve tampon, voire tout appareil de traitement des eaux.

Dans le cas d'un bassin, celui-ci comprend une paroi munie d'au moins un orifice de sortie relié au réseau d'assainissement. Bien entendu, ce bassin comprend également au moins un orifice d'entrée permettant de déverser l'eau dans ledit bassin délimité par la paroi. En outre, un régulateur de débit est rapporté au niveau de cet orifice de sortie, ledit régulateur étant notamment fixé sur la paroi. Il est toutefois possible de prévoir une chambre indépendante constituée d'une paroi distincte de la paroi dans laquelle sont déversées les eaux pluviales et/ou d'orages. Cette chambre indépendante intègre dans ce cas le régulateur de débit qui est également rapporté sur la paroi de la chambre du bassin au niveau d'un orifice de sortie communiquant avec le réseau d'assainissement.

Dans le cas d'une canalisation d'eau, notamment pour les eaux pluviales et/ou usées, celle-ci sera munie d'un regard dans lequel est logé un régulateur de débit. Ce regard comprend une paroi munie d'un orifice d'entrée et d'un orifice de sortie, le régulateur étant rapporté sur la paroi au niveau de cet orifice de sortie.

Dans le cas d'une cuve tampon, celle-ci comprend une paroi fermée munie d'au moins un orifice d'entrée permettant l'introduction de l'eau dans ladite cuve et/ou au moins un orifice de sortie au niveau duquel est rapporté un régulateur de débit selon l'invention.

Dans le cas d'un déversoir, celui-ci comprend au moins un orifice d'entrée relié sur une canalisation d'eaux pluviales et au moins deux orifices de sortie l'un raccordé sur le réseau d'assainissement et l'autre notamment vers un cours d'eau avoisinant. Au moins l'orifice de sortie relié au réseau d'assainissement est équipé d'un régulateur de débit selon l'invention rapporté sur la paroi au niveau de cet orifice.

D'autres caractéristiques et avantages apparaitront à la lecture de la description qui va suivre de plusieurs modes de réalisation du régulateur de débit selon l'invention, à l'appui de figures parmi lesquelles :

- les figures 1 et 2 illustrent un premier mode de réalisation d'un régulateur de débit selon l'invention ;
- les figures 3 et 4 illustrent un second mode de réalisation du régulateur de débit selon la présente invention ;
- les figures 5 à 7 illustrent différents modes de réalisation de l'orifice sur la première plaque fixe du régulateur de débit selon la présente invention ;
- la figure 8 illustre l'agencement d'un régulateur de débit sur la paroi même d'un bassin ;
- la figure 9 illustre un bassin de rétention comprenant un régulateur de débit intégré dans une chambre indépendante du bassin proprement dit dans lequel sont déversées les eaux ;
- la figure 10 illustre une cuve fermée équipée d'un régulateur de débit selon la présente invention ;
- les figures 11 et 12 illustrent deux courbes de débit théoriques en fonction du niveau de l'eau, respectivement dans le cas d'un régulateur de débit selon l'art antérieurement et d'un régulateur de débit selon l'invention.

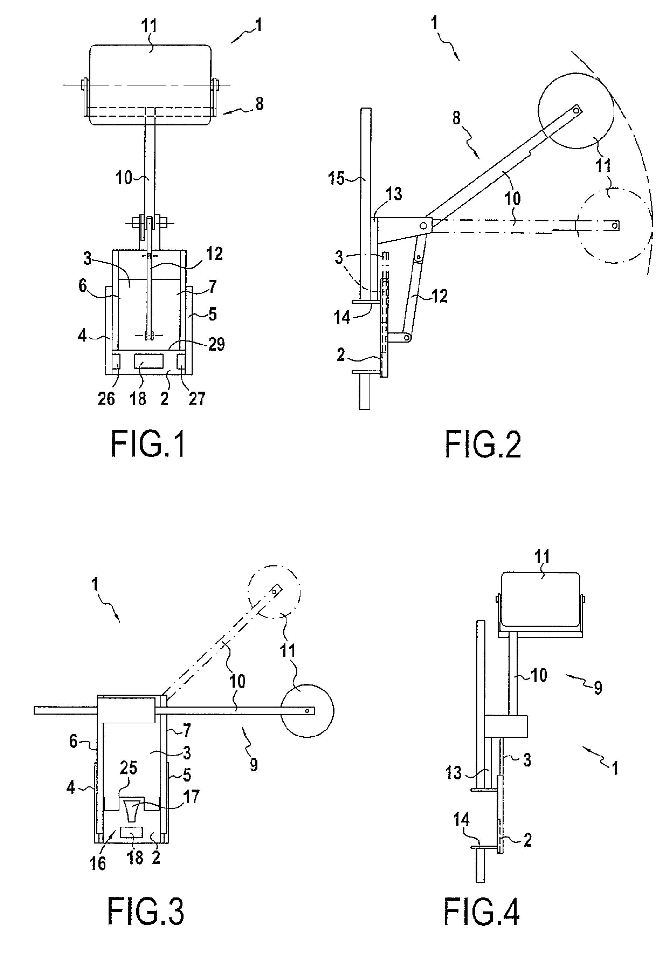

Tel qu'illustré sur les figures 1 à 4, le régulateur de débit 1 comprend une première plaque fixe 2 et une seconde plaque mobile 3 par rapport à la première plaque 2. Pour cela, la plaque fixe 2 comprend sur ses cotés latéraux deux glissières 4,5 agencées pour recevoir les extrémités latérales 6,7 de la plaque mobile 3, tel qu'illustré sur les figures 1 et 3. Cette plaque mobile 3 est actionnée en translation verticale par rapport à la plaque fixe 2 au moyen d'un système mécanique flotteur 8,9, tel qu'illustré sur les figures 1 à 4. Sur les figures 1 et 2, sont illustré un premier type de système mécanique flotteur 8 selon lequel le bras 10 muni à son extrémité d'un élément flottant 11 subit un pivotement vers l'avant du régulateur 1 permettant d'atteindre deux positions angulaires, tel qu'illustré sur la figure 2, correspondant à une position haute et à une position basse de la plaque mobile 3 par rapport à la plaque fixe 2, ladite plaque mobile 3 étant assujettie au bras 10 articulé au moyen d'un bras de liaison articulé 12.

Selon une variante de réalisation, le système mécanique flotteur 9 est agencé pour pivoter angulairement sur le coté du régulateur 1, tel qu'illustré sur les figures 3 et 4. De tels systèmes mécaniques flotteurs sont bien connus de l'homme du métier. Lorsque l'élément flottant 11 est positionné angulairement vers le haut, tel qu'illustré sur la figure 1, la plaque mobile 3 se situe en position basse par rapport à la plaque fixe 2. Au contraire, lorsque l'élément flottant 11 est positionné angulairement vers le bas, tel qu'illustré sur la figure 3, la plaque mobile 3 est en position haute par rapport à la plaque fixe 2.

Le régulateur 1 comprend également un cadre support 13, tel qu'illustré sur les figures 2 et 4, permettant le support du système mécanique flotteur 8,9. Ce cadre comprend un orifice 14 au niveau duquel est rapportée la plaque 2. Le cadre support 13 sera fixé sur un support 15 constitué par exemple par la paroi même d'un ouvrage de stockage du type bassin ou autre, tel que cela sera décrit plus en détail ci-après.

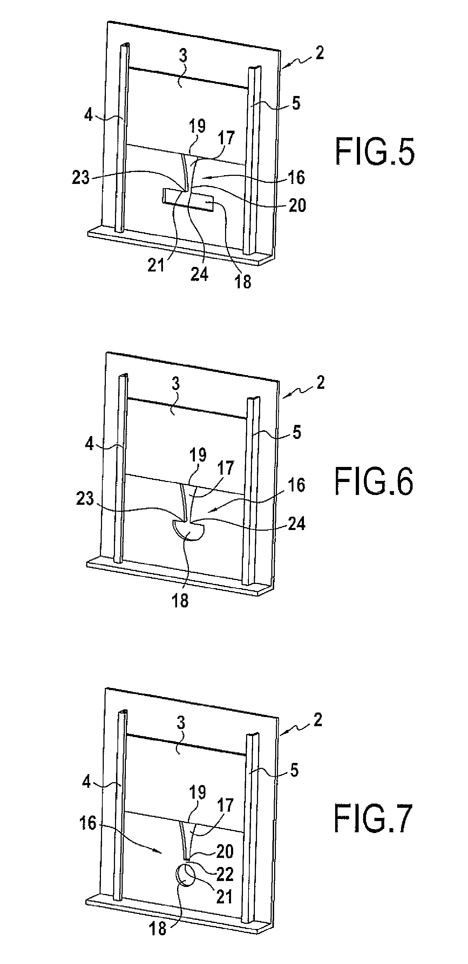

La plaque fixe 2 comprend un orifice 16, tel qu'illustré sur les figures 3, 5, 6 et 7. Cet orifice 16 est constitué de deux parties à savoir une partie supérieure 17 et une partie inférieure 18. Tel qu'illustré sur les figures 5 à 7, la partie supérieure 17 présente une forme sensiblement conique et évasée vers son extrémité supérieure 19. Il est possible de comparer cette forme à celle de la section longitudinale d'une trompette. On pourrait toutefois envisager d'autres variantes telles qu'une forme trapézoïdale isocèle dont la petite base située en position inférieure, et la grande base, positionnée en position supérieure, seraient de dimensions bien inférieures à la hauteur. La partie inférieure 18 de l'orifice 16 est quant à elle constituée d'une forme primitive. Sur la figure 5, cette forme primitive est constituée par un rectangle. Sur la figure 6, la forme primitive est constituée par un demi-cercle. Sur la figure 7, la forme primitive est constituée par un cercle. On pourrait bien entendu envisager d'autres formes primitives telles qu'un carré ou un trapèze isocèle dont la petite base et la grande base seraient de dimensions supérieures voire identiques à la hauteur dudit trapèze.

Sur les figures 5 et 6, on constate que la partie supérieure 17 et la partie inférieure 18 communiquent entre elles, c'est-à-dire que l'extrémité inférieure 20 de la partie supérieure 17 rejoint l'extrémité supérieure 21 de la partie inférieure 18, la partie supérieure 17 et la partie inférieure 18 ne formant qu'un seul passage. Au contraire, sur la figure 7 qui présente une variante de réalisation, on constate que la partie supérieure 17 et la partie inférieure 18 sont séparées l'une de l'autre par une portion pleine 22 de la plaque 2, l'extrémité inférieure 20 de la partie supérieure 17 étant distante de l'extrémité supérieure 21 de la partie inférieure 18. Ainsi l'orifice est constitué de deux passages distincts. Cette seconde variante de réalisation illustrée en figure 7 sera préférée à la première, car elle présente pour avantage d'éviter de créer des angles vifs 23,24, tel qu'illustré sur les figures 5 et 6, pouvant s'endommager sous l'action du flux de l'eau circulante voire en raison de chocs avec des obstacles éventuels pouvant circuler et passer au travers de l'orifice 16.

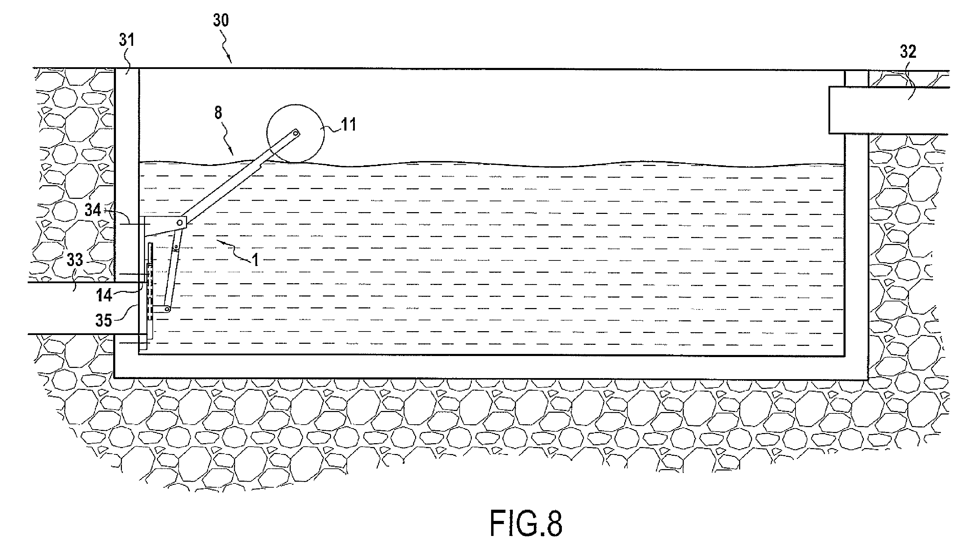

Un tel régulateur de débit 1 est prévu pour être agencé sur un ouvrage de stockage, tel qu'illustré par exemple sur les figures 8 à 10, ledit régulateur 1 étant notamment rapporté sur un support ou sur la paroi de cet ouvrage sur lequel est raccordé un conduit de sortie connecté notamment au réseau sanitaire. Un tel ouvrage est par exemple prévu pour permettre un stockage d'eau pouvant atteindre notamment un niveau de deux mètres de hauteur, le régulateur étant par exemple agencé pour être actionné lorsque le niveau atteint une hauteur h comprise entre un mètre et deux mètres. Bien entendu, cette plage d'actionnement du régulateur sera variable et définie en fonction du cahier des charges de l'installation à mettre en oeuvre, l'actionnement du régulateur se faisant lorsque le niveau a atteint une hauteur h comprise entre une valeur déterminée par les calculs et une valeur maximum définie par le cahier des charges. A ce titre, les données essentielles du cahier des charges qui permettront d'aboutir par des calculs algorithmiques à la forme précise de l'orifice 16 et aux caractéristiques dimensionnelles de celle-ci, ainsi qu'à la plage d'actionnement du régulateur, c'est-à-dire la hauteur minimale ($h_{min}$) et la hauteur maximale ($h_{max}$) du niveau d'eau entre lesquelles la plaque mobile va modifier l'obturation de la partie supérieure 17 de l'orifice 16, sont : le diamètre nominal de la canalisation de sortie de l'ouvrage au niveau de laquelle le régulateur est installé ; la hauteur d'eau maximum ($h_{max}$) en dessous de laquelle il faut réguler le débit ; et le débit de sortie à respecter jusqu'à la hauteur d'eau maximale ($h_{max}$) définie précédemment.

Ainsi, lorsque le niveau de l'eau atteint une hauteur h d'un mètre correspondant à la position de base du flotteur illustré aux figures 2 et 3, la plaque mobile 3 se situe en position haute, la partie supérieure 17 de l'orifice 16 étant complètement dégagée. Au contraire, lorsque le niveau atteint une hauteur h de deux mètres, le flotteur se situe en position haute correspondant aux positions illustrées sur les figures 1, 4 et 9, la plaque mobile 3 se situe alors en position basse selon laquelle elle assure le dégagement de la partie inférieure 18 de l'orifice 16.

Afin d'assurer le dégagement de la partie inférieure 18 de l'orifice 16, on prévoit un décrochement 25, tel qu'illustré sur la figure 3, en partie inférieure de la plaque mobile 3, ledit décrochement comprenant une forme correspondant au moins à la forme de la partie inférieure 18 de l'orifice 16, comme par exemple celles illustrées en figures 5, 6 et 7. On garantit ainsi le maintien de cette partie inférieure dégagée. Selon une variante de réalisation, on peut prévoir des éléments de butée 26,27, tel qu'illustré sur la figure 1, lesquels viennent en contact sur la partie inférieure 29 de la plaque mobile 3 en sorte de limiter sa translation vers le bas et garantir que la partie inférieure 18 reste complètement dégagée. On pourrait bien entendu prévoir d'autres variantes et notamment garantir que lorsque l'élément flotteur 11 a atteint sa position basse, la course vers le bas de la plaque mobile 3 soit arrêtée au niveau de l'extrémité supérieure 21 de la partie inférieure 18 de l'orifice 16.

Une telle forme de l'orifice 16 constitué de deux parties supérieure 17 et inférieure 18 a pour but d'assurer un débit de sortie d'eau dans l'ouvrage de stockage constant en fonction de l'ouverture de la guillotine, quelle que soit la hauteur de l'eau.

Selon un exemple de réalisation non limitatif, l'agencement du régulateur de débit sur la paroi de l'ouvrage et l'actionnement du flotteur mécanique sont tels qu'ils permettent trois phases de fonctionnement à savoir :

- Lorsque le niveau d'eau atteint une hauteur comprise entre 0 mètre et 0,135 mètre, (0m < h < 0,135m) la hauteur d'eau est tellement basse que l'orifice 16 n'est pas totalement immergé. Dans ce cas, l'eau ou le fluide subit un écoulement en surface.
- Lorsque le niveau d'eau a une hauteur comprise entre 0,135 mètre et 1 mètre, (0,135m < h < 1m) l'orifice 16 est totalement immergé dans l'eau tandis que la plaque mobile 3 reste complètement ouverte.
- Lorsque le niveau d'eau a une hauteur comprise entre 1 mètre et 2 mètres, (1m < h < 2m) l'orifice 16 est totalement immergé et la plaque mobile 3 se déplace du haut vers le bas tandis que le flotteur se déplace du bas vers le haut, la section de l'orifice 16 variant en fonction du niveau h.

Des essais théoriques s'appuient sur les lois de la mécanique des fluides et notamment sur le théorème de Bernouilli qui précise que sur une même ligne de courant la somme d'énergie est constante, sur la formule du coefficient de contraction Cc au niveau de l'orifice de sortie de l'ouvrage, et sur la formule du débit Qs au niveau de l'orifice de sortie. Partant de l'hypothèse que le fluide est incompressible et que par conséquent les débits sont conservés, et du fait que la section de l'orifice de sortie du bassin est bien inférieure à la section du bassin, on aboutit après plusieurs calculs au résultat théorique suivant :

$$f(x) = \frac{-Qs}{a.*Cc*h*\sqrt{2*g*h}}$$

avec

$$x = a*(h_{min} + x_{max} - h)$$

où :

- g est l'accélération ;
- a est une constante dépendant notamment du rapport existant entre la hauteur de l'élément flottant 11 et la position de la plaque mobile 3 ;
- $h_{min}$ est la hauteur d'eau pour laquelle l'orifice 16 est complètement ouvert et ;
- $x_{max}$ est la hauteur maximale de l'ouverture de l'orifice 16.

D'où la géométrie obtenue pour l'orifice 16 sur la plaque fixe 2, sur la base de ces fonctions précédentes.

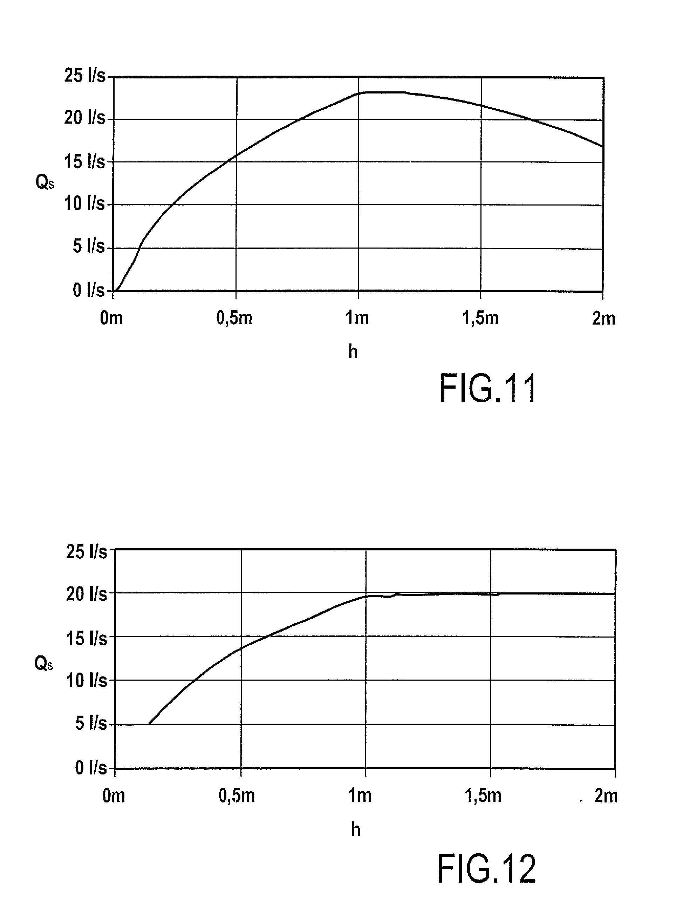

Ces fonctions permettent de comparer, d'une part, la courbe théorique du débit en fonction de la hauteur d'eau au niveau de l'orifice de sortie, tel qu'illustré sur la figure 1, avec un régulateur de débit traditionnel présentant un seul orifice de forme circulaire, et d'autre part, la courbe de débit en fonction de la hauteur d'eau au niveau de l'orifice de sortie, tel qu'illustré sur la figure 12, avec un régulateur de débit selon la présente invention. On constate que durant la phase d'actionnement du flotteur mécanique permettant la translation verticale de la plaque mobile 3 et la fermeture progressive de l'orifice 16 sur la première plaque fixe 2, c'est-à-dire quand le niveau d'eau varie entre la valeur déterminée par le calcul et la valeur maximale définie par le cahier des charges ($h_{min}$ < h < $h_{max}$), soit dans le cas de cet exemple, entre 1 mètre et 2 mètres, le débit en sortie Qs avec le régulateur de débit selon la présente invention, est quasiment constant, tandis qu'avec un régulateur de débit selon l'art antérieur, le débit de sortie Qs dans la phase où le niveau d'eau varie entre 1 mètre et 2 mètres, tend à décroitre progressivement.

Ainsi, le régulateur de débit selon l'invention permet d'optimiser la constance du débit de sortie durant la phase d'actionnement de la guillotine.

Les figures 8 à 10 illustrent différents ouvrages de stockage sur lesquels sont agencé un régulateur de débit 1 selon l'invention.

Sur la figure 8, l'ouvrage de stockage est constitué par un bassin 30 pouvant être ouvert sur l'extérieur voire fermé complètement. Ce bassin 30 comprend une paroi 31 notamment constituée en béton, laquelle reçoit un conduit d'entrée 32 par lequel pénètrent les eaux pluviales, lorsqu'il s'agit d'un bassin de rétention d'eaux pluviales, voire les eaux d'orages lorsqu'il s'agit d'un bassin d'orages. En outre, cette paroi 31 comprend également un conduit de sortie 33 au niveau duquel est agencé le régulateur de débit 1 selon la présente invention. Le régulateur de débit 1 est fixé sur la paroi 31 par des moyens de fixation traditionnels du type vissage 34 ou similaires, l'orifice 14 du régulateur de débit 1 recevant l'extrémité 35 du conduit de sortie 33.

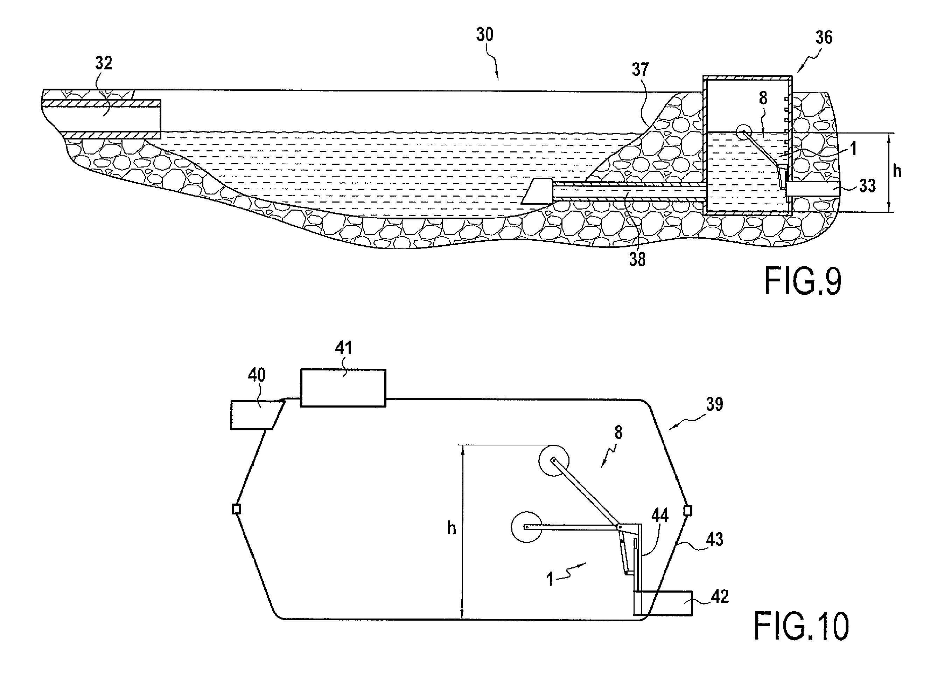

Selon une variante de réalisation illustrée en figure 9, le bassin 30 comprend une chambre intermédiaire 36 séparée physiquement du bassin proprement dit contenant l'eau pluviale ou l'eau d'orage. Cette chambre intermédiaire est reliée au bassin proprement dit 37, formant un conteneur, pouvant par exemple être constitué d'une paroi en béton ou d'une paroi naturelle, par l'intermédiaire d'un conduit intermédiaire 38 pénétrant dans la chambre intermédiaire 36 en partie basse. Cette chambre intermédiaire 36 comprend également une paroi de préférence constituée en béton et comprenant en partie basse un orifice de sortie sur lequel est raccordé un conduit de sortie 33 relié notamment au réseau sanitaire. L'assemblage du régulateur de débit 1 sera de préférence similaire au mode de réalisation illustré en figure 8. L'implantation de la chambre intermédiaire 36 est telle que le niveau d'eau dans le conteneur 37 correspond au niveau d'eau dans la chambre intermédiaire 36. Une telle chambre intermédiaire 36 est également constituée d'un regard permettant l'accès du régulateur de débit 1.

Une telle chambre intermédiaire, constituant dans ce cas un regard peut en outre être agencé directement sur une canalisation d'eaux pluviales ou d'eaux usées, voire sur un regard recevant simultanément les eaux pluviales et les eaux usées. Dans ce cas, le regard comprend plusieurs orifices d'entrée et un orifice de sortie au niveau duquel est rapporté le régulateur de débit 1 fixé sur la paroi en béton dudit regard.

On peut également prévoir un tel régulateur de débit 8 agencé dans une cuve 39 dite cuve tampon, tel qu'illustré sur la figure 10, laquelle comprend en partie supérieure un conduit d'entrée 40, éventuellement une zone d'accès 41 et un conduit de sortie 42 agencé en partie inférieure de la cuve 39. Le régulateur 1 pourra être agencé directement sur la paroi 43 de la cuve 39. Toutefois, afin d'éviter tout percement de cette paroi, on peut prévoir un support complémentaire 44 agencé à l'intérieur de la cuve 39 sur lequel est rapporté le régulateur de débit 1. Le régulateur de débit 1 sera fixé sur ce support de manière similaire au mode de réalisation décrit précédemment pour le bassin, à savoir au moyen de vis de fixation 34, le conduit de sortie 42 étant raccordé sur le régulateur 1.

On peut prévoir l'utilisation d'un tel régulateur de débit 1 sur d'autres installations et notamment sur un déversoir dont la conception est connue de l'homme du métier. Un tel déversoir est notamment constitué d'une paroi en béton comprenant un ou plusieurs orifices d'entrée raccordés sur des canaux d'eaux pluviales et au moins deux orifices de sortie l'un raccordé sur le réseau d'assainissement et au niveau duquel est rapporté le régulateur de débit 1 selon la présente invention, tandis que l'autre orifice de sortie est raccordé sur un conduit d'acheminement vers un cours d'eau environnant, lequel étant en outre équipé d'un système de fermeture à guillotine traditionnel, voire également d'un régulateur de débit 1.

D'autres caractéristiques peuvent être envisagées sans sortir du cadre de la présente invention. On pourra notamment prévoir de combiner certaines des variantes qui ont été décrites précédemment, en particulier en ce qui concerne la réalisation de l'orifice 16 sur la plaque fixe 2. On pourra également envisager la mise en oeuvre du régulateur de débit, notamment au niveau des appareils de traitement des eaux ainsi qu'au niveau des stations d'épuration.

**Revendications**

1. Régulateur de débit (1) du type guillotine, notamment pour un ouvrage de stockage d'eau, comprenant au moins une première plaque fixe (2) munie d'un orifice (16) pour l'écoulement de l'eau et une seconde plaque mobile (3) d'obturation de l'orifice (16) sur la première plaque (2), ladite seconde plaque (3) étant montée en translation verticale par rapport à la première plaque (2), des moyens de commande (8) étant agencés pour translater notamment verticalement entre une position haute et une position basse, la seconde plaque (3) par rapport à la première plaque (2) et modifier l'obturation de l'orifice (16) en fonction de la hauteur h d'eau, **caractérisé en ce que** l'orifice (16) est constitué d'une première partie supérieure (17) et d'une seconde partie inférieure (18), la partie supérieure (17) présentant une forme sensiblement conique et évasée vers son extrémité supérieure (19), telle que la section longitudinale d'une trompette, et la partie inférieure (18) présentant une forme primitive, telle qu'un carré, un rectangle, un cercle ou un demi-cercle.

2. Régulateur de débit (1) selon la revendication 1, dans lequel la partie supérieure (17) et la partie inférieure (18) de l'orifice (16) sont distantes l'une de l'autre sur la première plaque (2).

3. Régulateur de débit (1) selon l'une des revendications 1 ou 2, dans lequel des moyens de dégagement (25,26,27) sont agencés pour maintenir dégagée la partie inférieure (18) de l'orifice (16) lorsque la seconde plaque mobile (3) est en position basse.

4. Régulateur de débit (1) selon la revendication 3, dans lequel le côté inférieur de la seconde plaque (3) comprend un décrochement (25) dont les dimensions permettre de maintenir dégagée la partie inférieure (18) de l'orifice (16).

5. Régulateur de débit (1) selon la revendication 3, dans lequel des moyens de butée (26,27) sont agencés pour limiter la translation vers le bas de la seconde plaque (3) dans une position selon laquelle le bord inférieur (29) de ladite seconde plaque (3) est arrêté entre la partie supérieure (17) et la partie inférieure (18) de l'orifice (16).

**6.** Régulateur de débit (1) selon l'une des revendications 1 à 5, dans lequel les moyens de commande sont constitués par un système mécanique flotteur (8,9).

**7.** Régulateur de débit (1) selon l'une des revendications 1 à 6, dans lequel la première plaque (2) comprend sur sa face interne deux glissières verticales (4,5) disposées de chaque côté latéral de l'orifice (16), les extrémités latérales de la seconde plaque (3) étant montées coulissantes sur lesdites glissières (4,5).

**8.** Régulateur de débit (1) selon l'une des revendications 1 à 7, dans lequel des moyens de fixation (34) sont agencés sur la première plaque (2) pour permettre l'assemblage du régulateur (1) sur un support (31,15,44).

**9.** Bassin (30), notamment un bassin d'orage ou de rétention d'eaux pluviales, comprenant une paroi (31) munie d'au moins d'un conduit de sortie (33) au niveau duquel est rapporté un régulateur de débit (1) selon l'une des revendications 1 à 8.

**10.** Canalisation d'eau, notamment pour les eaux pluviales et/ou usées, munie d'un regard à l'intérieur duquel est agencé un régulateur de débit (1) selon l'une des revendications 1 à 8, ledit régulateur (1) étant rapporté sur la paroi du regard, au niveau d'un conduit de sortie.

**11.** Cuve tampon (39) comprenant une paroi (43) munie d'au moins un conduit de sortie (42) au niveau duquel est rapporté un régulateur de débit (1) selon l'une des revendications 1 à 8.

**12.** Déversoir comprenant une paroi munie d'au moins d'un orifice de sortie au niveau duquel est agencé un régulateur de débit (1) selon l'une des revendications 1 à 8.

FIG.1

FIG.2

FIG.3

FIG.4

FIG.5

FIG.6

FIG.7

FIG.8

FIG.9

FIG.10

EP 2 206 842 A1

FIG.11

FIG.12

Europäisches
Patentamt

European
Patent Office

Office européen
des brevets

**RAPPORT DE RECHERCHE EUROPEENNE**

Numéro de la demande

EP 09 18 0279

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | DE 37 41 437 A1 (SCHULZE OSWALD KG [DE]) 22 juin 1989 (1989-06-22) * le document en entier * ----- | 1-12 | INV. E03F5/10 F16K31/30 G05D7/01 |
| A | DE 38 22 555 A1 (GIEHL KLAUS ULRICH [DE]) 3 août 1989 (1989-08-03) * figures 4,5 * ----- | 1-12 | |
| A | CA 1 225 384 A1 (MCAULAY DON; CROSMAS ROBERT) 11 août 1987 (1987-08-11) * le document en entier * ----- | 1 | |

| | DOMAINES TECHNIQUES RECHERCHES (IPC) |
|---|---|
| | E03F F16K G05D |

Le présent rapport a été établi pour toutes les revendications

| Lieu de la recherche | Date d'achèvement de la recherche | Examinateur |
|---|---|---|
| Munich | 29 mars 2010 | Geisenhofer, Michael |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 09 18 0279

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-03-2010

| Document brevet cité au rapport de recherche | | Date de publication | Membre(s) de la famille de brevet(s) | Date de publication |
|---|---|---|---|---|
| DE 3741437 | A1 | 22-06-1989 | AUCUN | |
| DE 3822555 | A1 | 03-08-1989 | AUCUN | |
| CA 1225384 | A1 | 11-08-1987 | AUCUN | |

EPO FORM P0460

Pour tout renseignement concernant cette annexe : voir Journal Officiel de l'Office européen des brevets, No.12/82

**EP 2 206 842 A1**

**RÉFÉRENCES CITÉES DANS LA DESCRIPTION**

**Documents brevets cités dans la description**

- DE 3822555 A1
- DE 3741437 A1